# EUROPEAN PATENT APPLICATION

(11) **EP 4 697 842 A1**
(43) Date of publication of application: **18.02.2026**
(21) Application number: 24788591.6
(22) Date of filing: 29.03.2024
(51) Int. Cl.: H04W 72/512, H04W 72/21, H04W 84/12

(54) **COMMUNICATION DEVICE, CONTROL METHOD, AND PROGRAM**

(30) Priority: 12.04.2023 JP 2023065267
(71) Applicant: Canon Kabushiki Kaisha, Tokyo, 146-8501 (JP)
(72) Inventor: TSUJIMARU Yuki, Tokyo 146-8501 (JP)
(74) Representative: Canon Europe Limited
(86) International application number: PCT/JP2024/012960
(87) International publication number: WO 2024/214563

(57) **Abstract**

A communication device capable of wireless communication based on the IEEE 802.11 standards transmits a frame containing information pertaining to preemption involving low-latency data to an access point to which the communication device is connected. Also, the communication device transmits data to the outside in accordance with the reception of a trigger frame issued after the frame is transmitted to the access point.

## Description

### Technical Field

The present invention relates to a communication device that performs wireless communication.

### Background Art

The Institute of Electrical and Electronics Engineers (IEEE) 802.11 standards are known as communication standards related to wireless local area network (wireless LAN). In the IEEE 802.11be standard and its successor standard, coordinated operation by multiple access point devices (hereinafter also referred to simply as APs) is being considered to increase communication efficiency and throughput.

PTL 1 discloses a feature referred to as Restricted Target Wake Time (R-TWT), which involves establishing a period that can be used for the communication of data requiring low latency, and transmitting data requiring low latency during this period.

### Citation List

### Patent Literature

PTL 1: U.S. Patent Laid-Open No. 2022/0070772

### Summary of Invention

### Technical Problem

The feature referred to as R-TWT mentioned above can be implemented to reduce latency in the case of transmitting regularly occurring data during scheduled periods.

On the other hand, in other cases, data requiring low latency may occur outside the scheduled periods mentioned above. To transmit this data with low latency, it is necessary to achieve priority transmission using a feature different from RTWT.

The present invention has been devised to address at least one of the above problems. In one aspect of the present invention, one objective is to provide a mechanism in which, during communication of a wireless frame containing certain data, different data is transmitted instead of the certain data.

### Solution to Problem

A communication device according to one aspect of the present invention is characterized by including a first transmission control means that, in a case where data transmitted to the communication device by an access point to which the communication device is connected is received during a transmission opportunity acquired by the access point, and data to be transmitted at low latency and to be transmitted to the outside is stored in a transmission queue of the communication device, transmits a frame containing information indicating an acknowledgment of the received data and information pertaining to preemption involving low-latency data.

### Advantageous Effects of Invention

According to one aspect of the present invention, during communication of a wireless frame containing certain data, different data can be transmitted instead of the certain data.

### Brief Description of Drawings

[Fig. 1] Fig. 1 is a diagram illustrating an example of a configuration of a network.
[Fig. 2] Fig. 2 is a diagram illustrating a hardware configuration of a communication device.
[Fig. 3] Fig. 3 is a diagram illustrating a software configuration of a communication device.
[Fig. 4] Fig. 4 is a diagram illustrating an example of a wireless frame.
[Fig. 5] Fig. 5 is a diagram illustrating an example of a trigger frame.
[Fig. 6] Fig. 6 is a schematic diagram for explaining preemption control.
[Fig. 7] Fig. 7 is a schematic diagram for explaining different preemption control.
[Fig. 8] Fig. 8 is an example of control executed by a STA.
[Fig. 9] Fig. 9 is an example of control executed by an AP.
[Fig. 10] Fig. 10 is an example of reception control executed by an AP.
[Fig. 11] Fig. 11 is an example of transmission control executed by a STA.
[Fig. 12A] is a schematic diagram for explaining a modification.
[Fig. 12B] is a schematic diagram for explaining a modification.

### Description of Embodiments

The following describes embodiments in detail with reference to the attached drawings. However, the following embodiments do not limit the invention as recited in the claims. Although multiple features are described in the embodiments, it is not necessarily the case that all of the features are essential to the invention, and moreover, multiple embodiments may be combined in any way. Furthermore, in the attached drawings, the same or similar portions of the configuration are denoted with the same reference signs, and duplicate description is omitted.

### <Configuration of communication system>

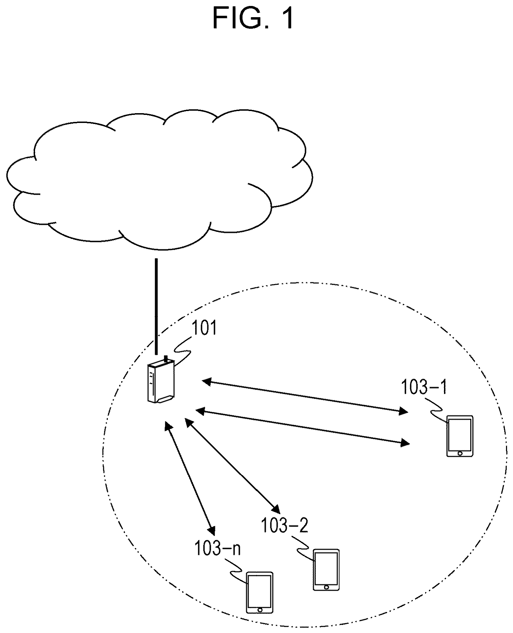

Fig. 1 illustrates an example of a configuration of a wireless communication system according to the present embodiment. The present wireless communication system includes one access point device (hereinafter also referred to simply as the AP, AP STA, or access point) and two station devices (hereinafter also referred to simply as the STAs, non-AP STAs, or stations). Hereinafter, the AP 101 and the STAs 103-1 to 103-n are collectively referred to as communication devices.

The AP 101 is configured to carry out communication of wireless frames in compliance with the IEEE 802.11bn standard, which is the successor standard to the IEEE 802.11be standard that targets a maximum transmission rate of 46.08 Gbps. The STAs 103-1 to 103-n are similarly configured to carry out communication of wireless frames in compliance with the successor standard.

Note that IEEE is an acronym for the Institute of Electrical and Electronics Engineers. The main features of 802.11bn, which is the successor standard to 802.11be, are high-reliability communication, low-latency communication, and improved throughput in times of congestion. Wireless frames communicated under the successor standard are also referred to as Ultra High Reliability (UHR) PPDUs. PPDU is an acronym for PLCP Protocol Data Unit, and PLCP is an acronym for Physical Layer Convergence Protocol.

Note that the names of the IEEE 802.11bn and UHR standards have been established for convenience based on the goals to be achieved in the successor standard and the features that will be the main focus of the standard, and may be referred to by different names once the standard is finalized. On the other hand, it should be understood that this specification and the appended claims are essentially a successor to the 802.11be standard and are applicable to all successor standards.

Note that although Fig. 1 illustrates a wireless communication network including one AP and n STAs as an example, the numbers of devices may be more than or fewer than what is illustrated. The AP 101 and the STAs 103-1 to 103-n are assumed to support the communication (transmission and reception) of UHR PPDUs under the 802.11bn standard, but are not limited thereto. In addition to the above, the communication devices may also be configured to support the communication of PPDUs under a legacy standard, that is, a standard preceding the 802.11bn standard. Specifically, the AP 101 and the STAs 103-1 to 103-n may be configured to support the transmission and reception of PPDUs under standards such as IEEE 802.11a/b/g/n/ac/ax/be.

The AP 101 provides a network to the STAs. The STAs 103-1 to 103-n join the network provided by the AP 101. Fig. 1 illustrates an example of a case in which the STAs 103-1 to 103-n have joined a network provided by the AP 101.

Note that the AP 101 and the STAs 103-1 to 103-n may also be configured to support wireless communication based on another communication standard such as Bluetooth^{®}, NFC, or Bluetooth^{®} Low Energy (LE). NFC is an acronym for Near Field Communication.

The AP 101 may also be configured to support wired communication using an Ethernet^{®} cable and/or wired communication using optical fiber. The present embodiment assumes a case in which the AP 101 is connected to the Internet via an Ethernet^{®} cable. Specific examples of the AP 101 and the STAs 103-1 to 103-n include a wireless LAN router and a personal computer (PC), but are not limited thereto. The AP 101 and 103-1 to 103-n may also be information processing devices such as wireless chips that support the transmission and reception of UHR PPDUs. Specific examples of 103-1 to 103-n include a camera, a tablet, a smartphone, a PC, a mobile phone, a video camera, a projector, and a wearable device such as smart glasses, but are not limited thereto.

Each communication device such as the AP 101 and the STAs 103-1 to 103-n can communicate using a bandwidth of 20 MHz, 40 MHz, 80 MHz, 160 MHz, 320 MHz, 480 MHz, or 640 MHz.

Incidentally, in recent years, demand for low-latency communications has also been increasing for wireless communication. For example, to meet the demand for low-latency communication, the 802.11be standard is provided with a function referred to as Restricted Target Wake Time (R-TWT), which involves establishing a period that can be used for communication requiring low latency. The function referred to as R-TWT can be implemented to reduce latency in the case of transmitting regularly occurring data during scheduled periods. On the other hand, in other cases, data requiring low latency may occur outside the scheduled periods mentioned above. To transmit this data with low latency, it is necessary to achieve priority low-latency transmission using a feature different from R-TWT.

To prioritize the transmission of irregularly occurring data requiring low-latency communication, the present embodiment provides a mechanism in which, during transmission of a wireless frame for communicating certain data, the low-latency data can be transmitted instead of the certain data. The following is a specific description.

### (Device configuration)

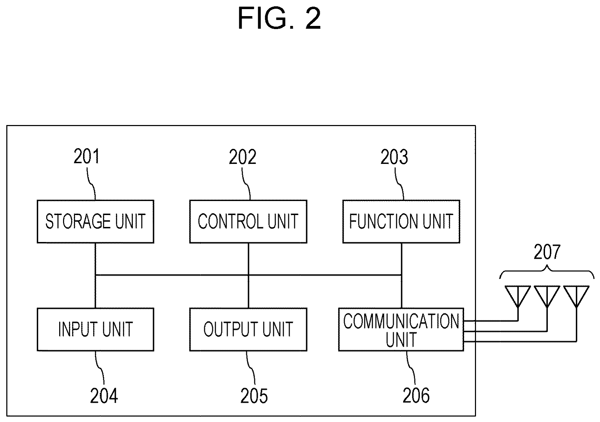

Fig. 2 illustrates an example of the hardware configuration of a communication device (AP and STA). The communication device has, as an example of the hardware configuration thereof, a storage unit 201, a control unit 202, a function unit 203, an input unit 204, an output unit 205, a communication unit 206, and antennas 207. Note that in the present embodiment, the communication device is assumed to have multiple antennas, but there may also be one antenna.

The storage unit 201 is formed from one or both of ROM and RAM, and stores various information, such as a program for performing various operations described later and communication parameters for wireless communication. RAM is an acronym for random access memory, and ROM is an acronym for read-only memory. Note that, besides memories such as ROM and RAM, the storage unit 201 may also use a storage medium such as a hard disk, a solid-state drive (SSD), or other non-volatile storage device.

The control unit 202 is configured by, for example, a processor such as a CPU or an MPU, an application-specific integrated circuit (ASIC), a digital signal processor (DSP), or a field-programmable gate array (FPGA). CPU is an acronym for central processing unit and MPU is an acronym for microprocessing unit. The control unit 202 controls the device overall by executing a program stored in the storage unit 201 and also causing an ASIC or other hardware circuitry to operate. Note that the control unit 202 may also control the device overall through cooperation between a program stored in the storage unit 201 and an operating system (OS).

The control unit 202 also controls the function unit 203 to execute prescribed processing such as imaging, printing, and projection. The function unit 203 is hardware with which the device executes the prescribed processing. For example, in a case where the communication device is a camera, such as a digital still camera, or a smartphone equipped with a camera, the function unit 203 is an imaging unit and performs imaging processing of images of the surroundings via a camera unit, not illustrated, that is included in the communication device. As another example, in a case where the communication device is a printer, the function unit 203 is a printing unit and performs processing for printing on a sheet such as paper on the basis of print data obtained from the outside by wireless communication. As another example, in a case where the communication device is a projector or smart glasses, the function unit 203 is a projection unit and performs processing for projecting image data and/or video data obtained from the outside by wireless communication. In the case of smart glasses, the projection surface is the retina or the like of an end user. The data to be processed by the function unit 203 may be data stored in the storage unit 201 or data communicated with another AP or STA via the communication unit 206 described later.

The input unit 204 accepts various operations from a user. The output unit 205 provides various output to the user. In this context, the output provided by the output unit 205 includes at least one from among visual presentation on a screen, sound output by a speaker, vibration output, and the like. Note that both the input unit 204 and the output unit 205 may also be achieved as a single module, like a touch panel.

The communication unit 206 controls wireless communication compliant with the IEEE 802.11 series of standards and controls IP communication. In the present embodiment, the communication unit 206 can cooperate with the antennas 207 to execute transmission and reception of UHR PPDUs, that is, wireless frames of the UHR standard, and/or PPDUs corresponding to a preceding standard. The antennas 207 can transmit and receive signals in the sub-GHz bands, the 2.4 GHz band, the 5 GHz band, the 6 GHz band, and at least one of the 7 GHz band and the 60 GHz band.

Note that in a case where the communication device supports the NFC standard, the Bluetooth^{®} standard, and/or the like mentioned above, the communication unit 206 may be configured to control wireless communication compliant with these communication standards.

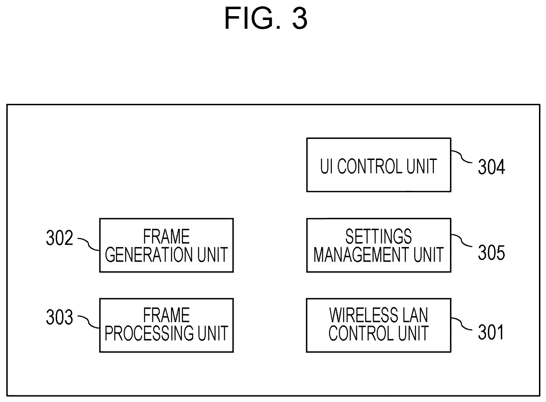

Next, a functional configuration of the communication device (AP 101 and STAs 103-1 to 103-n) will be described using Fig. 3. Fig. 3 is a block diagram for explaining a function configuration of the communication device.

The communication device includes a wireless LAN control unit 301, a frame generation unit 302, a frame processing unit 303, a settings management unit 305, and a UI control unit 304.

Each function is described below. The wireless LAN control unit 301 controls the antennas 207 and the communication unit 206 to transmit and receive wireless signals with respect to another communication device. Specifically, the wireless LAN control unit 301 cooperates with the frame generation unit 302 and the frame processing unit 303 to execute communication control of wireless frames such as UHR PPDUs in accordance with the IEEE 802.11 series of standards.

The frame generation unit 302 generates a wireless frame to be transmitted by controlling the communication unit and the antennas on the basis of an instruction from the wireless LAN control unit 301. The wireless frame is formed from a preamble field and a data field. In the data field, MAC frames such as management frames, control frames, and data frames are stored. The wireless LAN control unit 301 manages multiple transmission queues, not illustrated, that have been given relative priorities, and instructs the frame generation unit 302 to generate wireless frames on the basis of data accumulation conditions and the like in the multiple transmission queues.

A generated wireless frame containing a physical layer (PHY) preamble and data is transmitted to the outside by the wireless LAN control unit 301, the communication unit 206, and the antennas 207. Also, the data of a wireless frame received through the cooperation of the antennas 207, the communication unit 206, and the wireless LAN control unit 301 is passed to the frame processing unit 303. The frame processing unit 303 conducts an analysis on the basis of the data in the wireless frame, and notifies a function in a higher layer, not illustrated, or performs processing for controlling wireless communication on the basis of information obtained by the analysis. For example, in a case where the communication device is an AP and data addressed to the STA 103-1 is stored in a wireless frame received from the outside, the data may be stored in one of the transmission queues mentioned above on the basis of the type of the data.

The settings management unit 305 manages communication parameters necessary for network construction and STA communication, such as MCSs to be used for communication with other communication devices, the operating frequency band of the communication device itself, a BSS ID, BSS Color, and information on the bandwidth for communicating PPDUs. MCS is an acronym for modulation and coding scheme, and is information indicating a modulation and coding scheme to be applied to communication. BSS ID is an acronym for basic service set identifier, and is information that uniquely identifies a network. BSS Color is a value corresponding to a color code for BSS determination. BSS Color is set to a value that does not overlap with another AP in the vicinity. Besides the above, various information to be used for preemption control and the like is also stored.

The UI control unit 304 cooperates with the output unit 205 to provide an operating screen to the user, cooperates with the input unit 204 to detect user operations such as modifications to operation settings made on the operating screen mentioned above, and requests the settings management unit 305 to apply the modifications to the operation settings. The UI control unit 304 cooperates with the output unit 205 to provide the user with a modification screen for modifying an operation setting regarding whether or not to transmit preemptible PPDUs. If a user operation performed on the modification screen to modify an operation setting is detected, the settings management unit 305 is requested to apply the modification to the operation setting. Upon receiving the request, the settings management unit 305 modifies the stored operation setting.

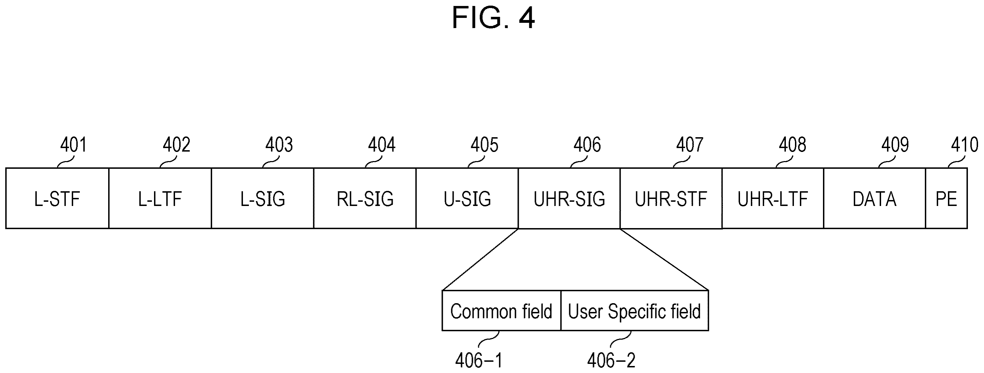

Next, a UHR PPDU to be transmitted by the communication device in the present embodiment will be described using Fig. 4. Fig. 4 illustrates an example of the format of a UHR multi-user (MU) PPDU to be transmitted by the communication device.

The UHR PPDU illustrated in Fig. 4 includes short training fields (STF), long training fields (LTF), and signal fields (SIG). As illustrated in Fig. 4, the beginning of the PPDU contains fields 401 to 403 for ensuring backward compatibility with the IEEE 802.11a/b/g/n/ax standards.
Specifically, a Legacy Short Training Field (L-STF) 401 and a Legacy Long Training Field (L-LTF) 402 are included as training fields. Also, a Legacy Signal Field (L-SIG) 403 is included as a signal field.

Note that L-LTF is placed immediately after L-STF, and L-SIG is placed immediately after L-LTF. Furthermore, a Repeated L-SIG (RL-SIG) is placed immediately after L-SIG. In the RL-SIG field, the content of L-SIG is repeated and transmitted. RL-SIG enables the receiver to recognize that the PPDU is compliant with the IEEE 802.11ax and later standards.

L-STF is used for PHY frame signal detection, automatic gain control (AGC), timing detection, and the like. L-LTF is used for precise frequency/time synchronization, channel state information (CSI) acquisition, and the like. L-SIG is used for transmitting control information including information on the data transmission rate and the PHY frame length. The communication device that receives a wireless frame can using the information on the data transmission rate and the PHY frame length to ascertain the timing at which the transmission of the wireless frame will be completed. Equipment that complies with the IEEE 802.11a/b/g/n/ax standards and equipment that complies with the 802.11be standard or the UHR successor standard can decode these various legacy fields.

The PPDU further includes a Universal Signal Field (U-SIG) 405 placed immediately after RL-SIG. U-SIG is planned to be used in common in the IEEE 802.11be and later standards, and is a field for transmitting control information for each standard. U-SIG includes a PHY Version Identifier field storing a PHY version and a BSS Color field storing a color code for BSS determination. In the case of a UHR MU PPDU, a value (1, for example) indicating a UHR MU PPDU is stored in the PHY version identifier.

Immediately after U-SIG, an Ultra High Reliability signal field (UHR-SIG) 406 is placed. UHR-SIG includes control information that could not fit into U-SIG and control information to be reported to each user in a case of performing multi-user transmission.

Next, after UHR-SIG 406, UHR-STF 407, which is an STF for UHR, and UHR-LTF 408, which is an LTF for UHR, are placed. UHR-LTF is information to be used for MIMO estimation, beamforming estimation, and the like. Multiple UHR-LTFs may be placed depending on the number of MIMO antennas and whether beamforming is necessary. Up to eight UHR-LTFs may be placed.

After these control fields, a data field 409 and a Packet Extension field 410 are placed. The fields from L-STF to UHR-LTF in the PPDU of Fig. 4 are called the PHY preamble.

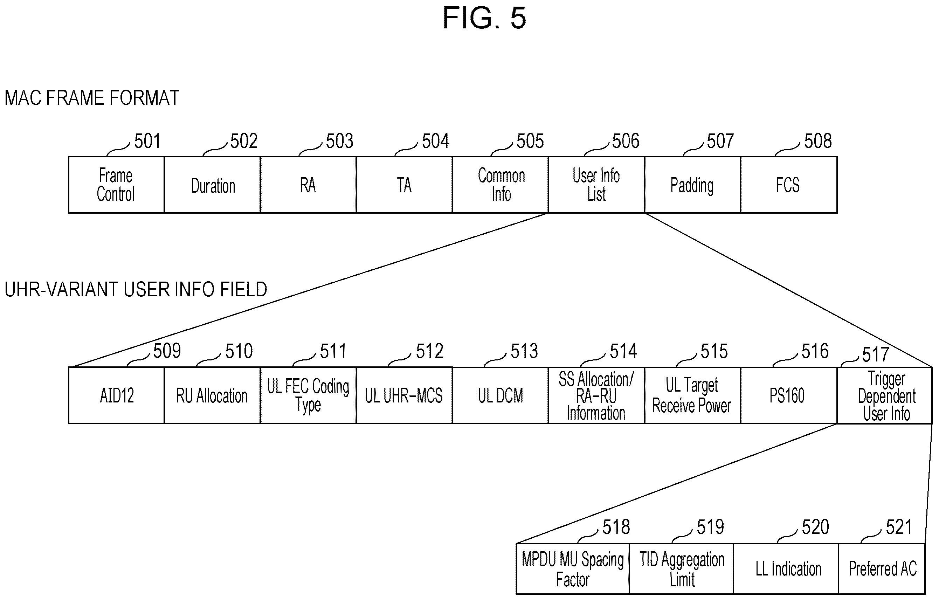

Next, Media Access Control (MAC) frames stored in the data field 409 will be described using Fig. 5. Fig. 5 illustrates the format of a trigger frame that the AP 101 transmits to surrounding STAs. The trigger frame illustrated in Fig. 5 is a control frame used by the AP to convey instructions for performing uplink communication to subordinate STAs. A STA designated as an addressee in the trigger frame can transmit uplink data in response to the reception of the trigger frame.

The fields 501 to 505 conform to the content of an MAC frame according to the IEEE 802.11 standards, and for this reason a description is omitted, as appropriate. In the field 501, "01" is stored in a Type value subfield (B3-B2) and "0010" is stored in a Subtype value subfield (B7-B4) to indicate that the frame is a Trigger frame. Also, the present embodiment assumes that "0", indicating Basic, is stored in a Trigger Type subfield of the field 505. However, the configuration is not limited to the above. In a case where a trigger frame is issued for low-latency communication described later, the trigger frame can also be configured to store other values to indicate that the frame is a trigger frame for transmitting low-latency data. In this case, for example, one of the values from 8 to 15, which are currently in the Reserved state, is defined to indicate a trigger frame for low-latency communication. Then, in a case of issuing a trigger frame for low-latency communication, the AP 101 may be configured to store the defined value in the Trigger Type subfield of the field 505.

Next, a User Info List field 506 will be described. In the field 506, there are stored one or more User Info Fields that combine information identifying one or more STAs that are to perform uplink communication and information conveying transmission conditions and the like to the one or more STAs. In a case of causing multiple STAs to transmit uplink data at the same time, the AP 101 stores multiple User Info Fields in the field 506. For example, in a case of wanting to cause the STA 103-1 and the STA 103-2 to perform uplink communication, the AP 101 stores two User Info Fields in the field 506.

In the present embodiment, it is assumed that the AP 101 includes the User Info Field in the UHR-Variant format that can be interpreted by communication devices that support the IEEE 802.11bn standard.

The field includes an AID12 subfield 509 storing information identifying the STA that is to perform uplink communication, and an RU Allocation subfield 510 indicating a Resource Unit (RU) that is to be used by the STA. The field also includes a UL UHR-MCS subfield 512 indicating a modulation scheme that is to be used at the time of transmission. Subfields 511 and 513-515 indicating other transmission conditions are also included. A PS160 field stores information pertaining to a Large size MRU. A STA receiving this information identifies the RU that the STA itself is to use for uplink transmission on the basis of the value of the PS160 subfield 516 and the value of the RU Allocation subfield 510. Note that value with special significance, such as "0" or "2045", can also be stored in the AID12 subfield 509. 0 indicates that the STAs connected to the AP 101 are RA-RUs capable of using the Uplink OFDMA Random Access (UORA) function.

2045 indicates that STAs not connected to the AP 101 are RA-RUs capable of using the Uplink OFDMA Random Access (UORA) function.

Lastly, a Trigger Dependent User Info subfield 517 will be described. 517 is made up of 518 and 519, which store more detailed transmission conditions, and 520 and 521, which store information indicating transmission-related recommendations. An LL (low-latency) Indication subfield 520 stores 1-bit information indicating whether or not the frame is a transmission opportunity allocated to a STA for the transmission of low-latency data. The case where "1" is stored indicates that the frame is a transmission opportunity allocated to a STA for the transmission of low-latency data, whereas the case where "0" is stored indicates that the frame is an ordinary transmission opportunity that is not limited to low-latency data. Next, a Preferred AC subfield 521 stores information indicating the AC, that is, the type of traffic, that is preferred for transmission. Specifically, a value corresponding to any of AC_VO for voice data, AC_VI for video data, AC_BE for best-effort data, and AC_BK for background data is stored.

Note that in a case where "1" is stored in the subfield 520, the value stored in the subfield 521 can also be given a different meaning. For example, a value can be stored to indicate that mission-critical traffic such as data for autonomous driving, input for robotic manipulation, and input for remote control of medical treatment systems are preferred for transmission. Also, a value can be stored to indicate that traffic for entertainment purposes such as online games and XR (eXtended Reality) for which, although the traffic is of relatively lower priority than the values mentioned above, the latency should be as low as possible, is preferred for transmission. Moreover, a value can also be stored to indicate that other low-latency traffic of even lower priority may be transmitted.

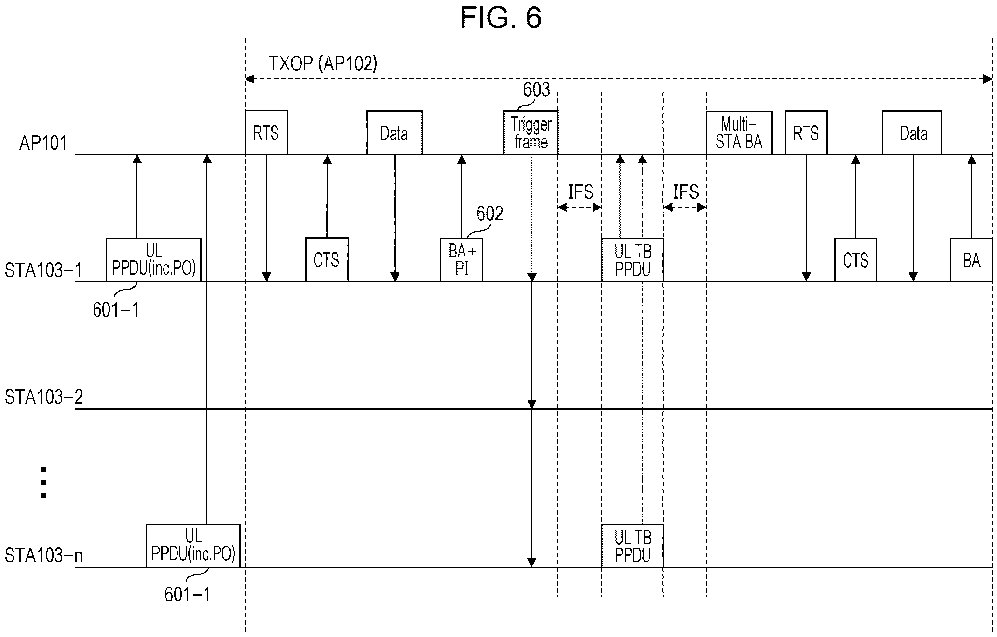

Next, preemptive communication in the present embodiment will be described using Fig. 6. Fig. 6 is a schematic diagram for explaining preemptive communication in the present embodiment.

Fig. 6 is a chart representing a method by which one of the STAs 103 preemptively transmits a low-latency frame in an uplink transmission while the AP 101 has acquired a TXOP and is transmitting data downlink from the AP 101 to the STA 103-1. Originally, the AP 101 can transmit data downlink until the acquired TXOP period runs out. In a first preemptive communication control according to the present embodiment, preemptive communication of low-latency data is achieved by utilizing the TXOP that the AP 101 has secured for downlink. Specifically, on the basis of information from STAs regarding the anticipated occurrence of low-latency data, information indicating that low-latency data has actually occurred, and the like, a trigger frame for uplink is issued, as appropriate, and uplink transmission is performed. The following is a specific description.

First, the AP 101 receives a frame in advance from a STA and acquires information indicating that the STA "might preemptively transmit a low-latency frame" (601-1). Due to space limitations, in Fig. 6 and other schematic diagrams as well as in the description that follows, the uplink PPDU containing the above information is referred to as the UL PPDU (inc. PO), and the information itself is referred to as PO information. PO is an acronym for Preemption Occuuarency. A configuration can also be adopted such that an assumed data volume to be anticipated in the event that low-latency data occurs is reported together with the above information. In this case, the AP 101 uses the assumed data volume acquired in advance to determine the size of the RU to be allocated to the STA.

In this situation, it is assumed that information indicating that the STA 103-1 and the STA 103-n might preemptively transmit a low-latency frame is included. The acquisition of this information may be performed when the AP 101 and the STA 103-1 and the STA 103-n establish a connection, or at any time thereafter. A period of validity may also be established, and the information may be updated before the period of validity runs out.

Next, processing during downlink transmission from the AP 101 to a STA will be described. The AP 101 acquires a TXOP and begins data transmission to the STA. Specifically, a Request To Send (RTS) frame, a Clear To Send (CTS) frame, a Data frame, and a Block Ack (BA) frame are exchanged with the STA. This example illustrates the case of performing downlink communication to the STA 103-1. Also, it is assumed that subsequent downlink data to be transmitted to the STA 103-1 accumulates in a transmission queue even after receiving the BA, which is an acknowledgment.

Also, in the present embodiment, a STA (for example, the STA 103-1) receiving data on the downlink from the AP can transmit a BA along with Preemption Immediately (PI) information indicating the presence of preempting data. The information may be configured to extend a BA frame and be stored in an area of the BA frame, or may be achieved by transmitting a BA frame coupled with an MAC frame in which the PI information is stored. Another possible configuration is to convey the PI information by extending the HT Conrol field and/or QoS field of an MAC frame. The following description of the present embodiment gives an example of a case in which the PI information is conveyed via the HT Conrol field. Another possible configuration is to include the PI information along with information indicating the volume and/or type low-latency data that the STA expects to transmit.

At this point, the AP 101 having received the PO information in 601-1 and/or the PI information in 602 temporarily interrupts transmission processing even if data to be transmitted to the STA 103-1 is accumulated in a transmission queue. The AP then transmits a trigger frame 603 in order to accept low-latency data on the uplink from a STA. In this case, the AP 101 determines transmission conditions, such as which RU is to be allocated to which STA in the trigger frame, how many RA-RUs to provide, and the period of uplink transmission, as appropriate, on the basis of the PO information and the assumed data volume, the PI information and the volume and type of data, or the like. The trigger frame illustrated by way of example in Fig. 5 is generated and transmitted to the outside so that uplink transmission is performed on the basis of the determined information. For the sake of explanation, the description below assumes that the AP 101 transmits a trigger frame that allocates RUs to the STA 103-1 and the STA 103-n.

A STA receiving the trigger frame 603 transmits a UL TB PPDU to the AP 101 if the STA itself is designated as being allowed to perform preemptive uplink transmission and the STA has preempting data. The AP 101 receiving the UL TB PPDU transmits a Multi-STA BA. Note that, although omitted due to space limitations, in a case where RA-RUs are designated in the trigger frame, it is also possible to transmit the preempting data by using the RA-RU that has won a transmission opportunity by decreasing the OBO counter. Note that in a case where no PI information or PO information is received from any STA, the AP 101 may simply transmit downlink data to the STA 103-1 or the like without issuing such a trigger frame. Note that details such as the timing at which to issue the trigger frame are described later.

Thereafter, if TXOP time still remains, the AP 101 again performs ordinary TXOP-compliant downlink communication with STAs such as the STA 103-1.

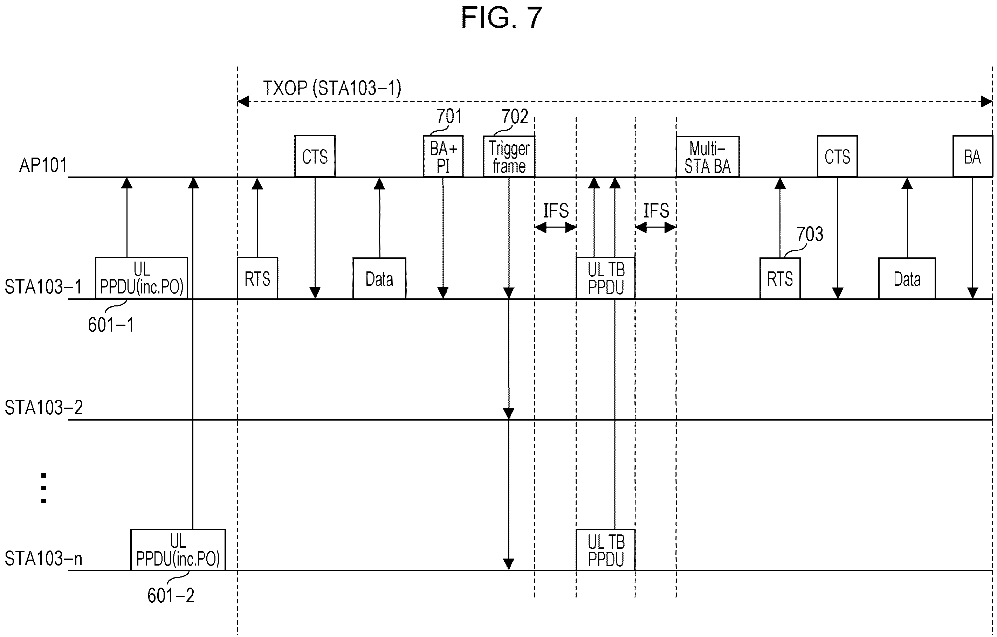

Different preemptive communication in the present embodiment will be described using Fig. 7. Fig. 7 is a schematic diagram for explaining different preemptive communication in the present embodiment.

Fig. 7 is a schematic diagram representing a procedure for performing preemption control for low-latency data while the STA 103-1 has acquired a TXOP and data is being transmitted downlink from the AP 101 to the STA 103-1. Steps similar to those in Fig. 6 are denoted with similar signs.

As indicated by 601-1, the AP 101 receives PO information from a STA in advance. The AP 101 can be configured to receive the PO information along with the assumed data volume, in a manner similar to the procedure in Fig. 6.

Thereafter, the STA 103-1 acquires a TXOP, and an RTS frame, a CTS frame, a Data frame, a BA frame, and the like are exchanged between the STA 103-1 and the AP 101. The difference is that the data sender/receiver relationship is the reverse of Fig. 6.

The AP 101, upon determining that low-latency data should be accepted on the uplink in this situation on the basis of the PO information, the assumed data volume, and the like, includes PI information for transmission when transmitting a BA frame to the STA 103-1 (701). The STA 103-1 receiving the BA frame along with the PI information recognizes that the uplink transmission that was expected to continue has been preempted by low-latency data and therefore will be interrupted, and interrupts the transmission processing.

The AP then transmits a trigger frame 702 in order to accept low-latency data on the uplink. The determination of transmission conditions and the like at this point may be achieved in a manner similar to the determination method described using Fig. 6. Note that since this transmission occurs because the STA 103-1 has forfeited a transmission opportunity, a configuration to give the STA 103-1 preferential treatment can also be adopted. Specifically, in a case where RUs have been allocated to each STA for the receipt of assumed low-latency data, but excess RUs remain available for uplink transmission, the AP 101 can be configured to allocate a RU with a larger number of tones to the STA 103-1.

For the sake of explanation, the description below gives an example of a case in which RUs for uplink transmission are allocated to the STA 103-1 and the STA 103-n.

A STA receiving the trigger frame 702 transmits a UL TB PPDU to the AP 101 if the STA itself is designated as being allowed to perform preemptive uplink transmission and the STA has preempting data. The AP 101 receiving the UL TB PPDU transmits a Multi-STA BA.

The STA 103-1 receiving the Multi-STA BA resumes uplink transmission processing upon determining that its own secured TXOP still remains. For example, ordinary TXOP-compliant communication with the AP 101 is performed.

The different preemption procedure described above can also be used to achieve preemptive uplink transmission in a case where another STA is performing uplink transmission.

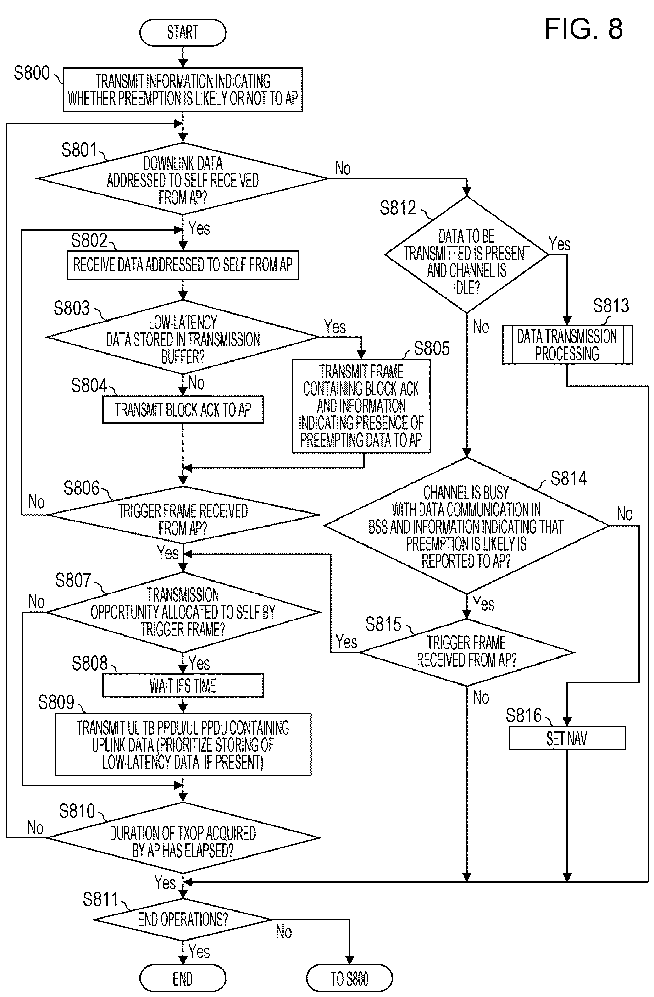

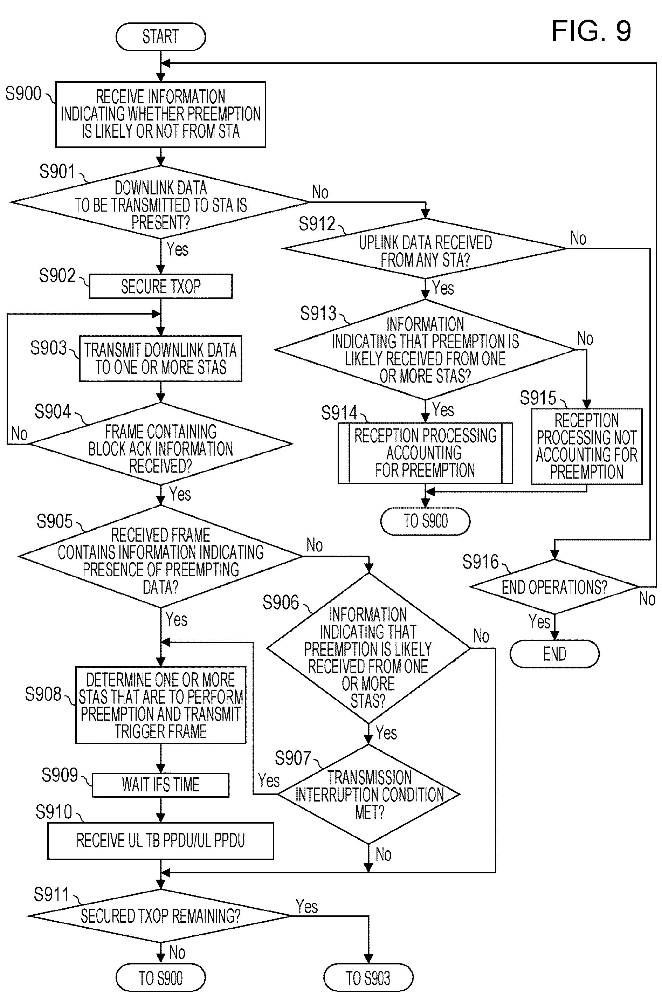

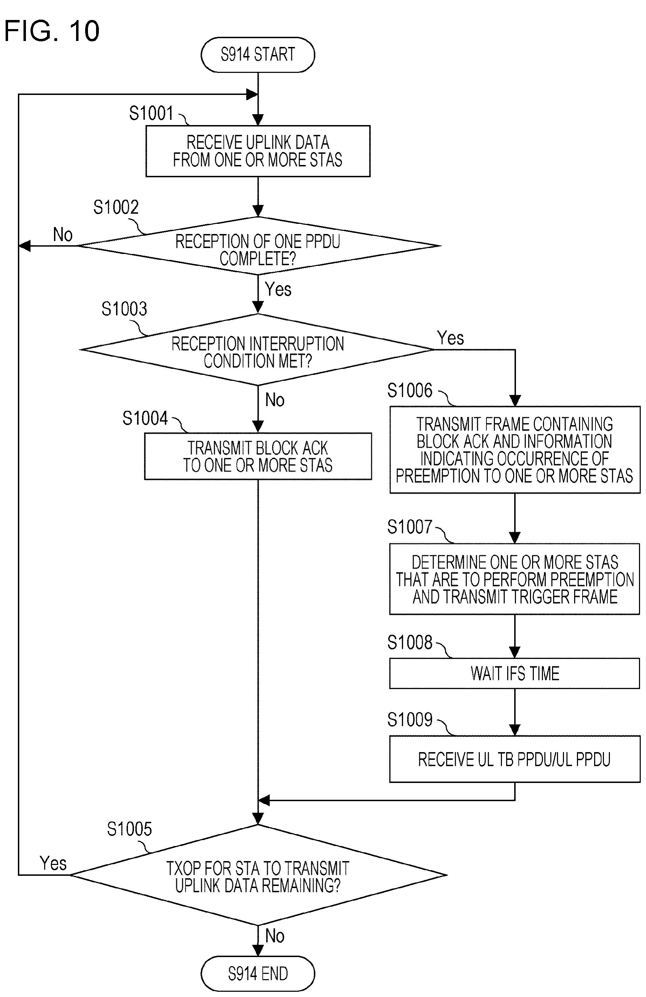

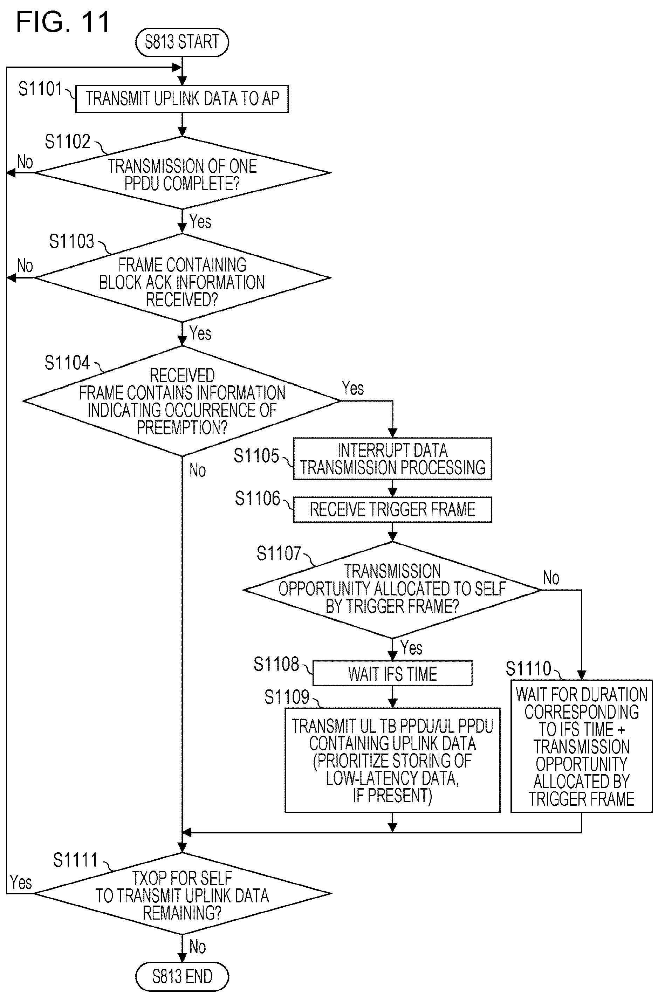

Next, specific control will be described using the flowcharts in Figs. 8 to 11. Figs. 8 and 11 are flowcharts for describing an example of PPDU communication control executed by a communication device that is any of the STAs 103-1 to 103-N, while Figs. 9 and 10 are flowcharts for describing an example of PPDU communication control executed by a communication device that is the AP 101. The flowcharts in Figs. 8 to 11 illustrate an excerpted series of steps for achieving preemption control.

Each processing step illustrated in the flowcharts in Figs. 8 and 11 is executed by having a processor in the control unit 202 of each STA 103 execute a computer program stored in the storage unit 201. Each processing step illustrated in the flowcharts in Figs. 9 and 10 is executed by having a processor in the control unit 202 of the AP 101 execute a computer program stored in the storage unit 201. Note that some processing steps, such as transmission, modulation, reception, and/or decoding in Figs. 8 to 11 are assumed to be achieved by having the processor in the control unit 202 of each communication device work in cooperation with the communication unit 206 and an ASIC, DSP, FPGA, and/or the like in the control unit 202. Note that in cases where the entity responsible for a processing step is to be clearly indicated, one of the function units described using Fig. 3 is used as the grammatical subject of the description.

First, communication control by the STAs 103-1 to 103-N will be described using Fig. 8. In S800, the frame generation unit 302 generates a UL PPDU containing information indicating whether preemption is likely or not. Next, the wireless LAN control unit 301 cooperates with the communication unit 206 to transmit the UL PPDU containing information indicating whether preemption is likely or not to the AP (for example, the AP 101) to which the STA itself is connected. The processing in S800 corresponds to the transmission of a UL PPDU containing PO information illustrated by way of example in S601-1. Note that this information can be included in the HT Control Filed located at the end of the MAC header. More specifically, a configuration can be adopted to notify the AP of PO information by storing the PO information in the A-Control field of the HT field of the HE Variant format in which B0-B1 are set to "11". For example, each STA stores a UHR operating mode (UHR OM) field in the A-Control field of the HT Control field. Specifically, the UHR OM is included in a Control subfield made up of a Control ID that corresponds to the UHR OM field and a corresponding Control Information subfield. As an example, "0x10" can be designated in the Control ID that corresponds to the UHR OM. Each STA then stores the PO information in the Control Information subfield. In a case of having determined that preemption is likely, each STA sets "1" in the area where the PO information is stored, whereas in a case of having determined that preemption is unlikely, each STA sets "0" in the area where the PO information is stored. This mechanism can be used to inform the AP of whether preemption is likely or not. Note that the method for conveying the PO information is not limited to the above. Also, each STA can determine whether preemption is likely or not on the basis of application execution status or the like. As another example, each STA may determine that preemption is likely in a case where there is a history of transmitting IP packets with the DSCP value in the DS field set to a value that means Expedited Forwarding within a certain period. Furthermore, the control unit 301, in conjunction with the settings management unit 305, determines that preemption is unlikely in a case where the operation settings of the communication device are set to indicate that the communication device will not perform preemptive transmission. Note that the first three bits of the DS field may be regarded as an IP Precedence value, and if an IP packet with a value of "5", indicating Critial, has been communicated within a certain period, it may be determined that preemption is anticipated to occur. The probability of whether or not an uplink transmission of low-latency data may occur in the future may also be estimated using past communication data as input, and the estimated probability may be used as a basis for determining whether preemption is likely or not. For example, an inference result indicating that preemption is likely can be obtained by inputting past communication data into trained model data that has been trained using a known technique such as supervised learning or deep learning. In this case, each STA may determine whether preemption is anticipated to occur or not on the basis of a likelihood obtained as the inference result. Each STA can also be configured to report the PO information along with the assumed data volume to be anticipated in the event that low-latency data occurs.

Returning to the explanation of Fig. 8, in S801, the control unit 301 cooperates with the communication unit 206 to determine whether downlink data addressed to the STA itself is received from the AP. If it is determined that downlink data addressed to the STA itself is received from the AP, the processing is advanced to S802, whereas if it is determined that downlink data addressed to the STA itself is not received from the AP, the processing is advanced to S812.

In S802, the control unit 301 cooperates with the communication unit 206 and the frame processing unit 303 to receive the downlink data addressed to the STA itself from the AP. The received data is processed by the frame processing unit 303 and, if necessary, transferred to a higher layer such as the IP layer or the application layer. Next, in S803, the control unit 301 determines whether or not low-latency data for uplink transmission that has been received from a higher layer is stored in a transmission queue. If it is determined that low-latency data is stored in a transmission queue, the processing is advanced to S805, whereas if it is not determined that low-latency data is stored in a transmission queue, the processing is advanced to S804. In S804, the control unit 301 cooperates with the frame generation unit 302 to generate a frame indicating a Block Ack.
The control unit 301 then cooperates with the communication unit 206 to transmit the generated frame indicating a Block Ack to the AP 101. Note that the Block Ack transmitted in S804 does not include the PI information described above.

On the other hand, in S805, the control unit 301 cooperates with the frame generation unit 302 to generate a frame containing a Block Ack and information indicating the presence of preempting data. Next, the control unit 301 cooperates with the communication unit 206 to transmit the frame containing a Block Ack and information indicating the presence of preempting data to the AP 101. In other words, the frame transmitted in S805 includes the PI information described above. The PO information transmitted in S800 and the PI information transmitted in S805 fulfill the role of prompting the AP to issue a trigger frame. Details will be described later using Fig. 9.

In S806, the control unit 301 determines whether or not a trigger frame is received from the AP. If a trigger frame is received from the AP, the processing is advanced to S807, whereas if a trigger frame is not received from the AP, the processing is advanced to S802 and processing for standing by and receiving further downlink data is performed.

Next, the processing in a case where a trigger frame is received will be described from S807. In S807, the control unit 301 cooperates with the frame processing unit 303 to determine whether or not a transmission opportunity is allocated to the STA itself by the trigger frame. If it is determined that a transmission opportunity is allocated to the STA itself, the processing is advanced to S808, whereas if it is determined that a transmission opportunity is not allocated to the STA itself, the processing is advanced to S810. More specifically, the control unit 301 determines that a transmission opportunity is allocated in a case where the AID of the STA itself is included in the AID12 subfield 509 described in Fig. 5. Note that in a case where RA-RUs are designated in the trigger frame, the processing may also be advanced to S808 in a case where a transmission opportunity is won by decreasing the OBO counter described above. Also, the control unit 301 determines that a transmission opportunity is allocated to the STA itself in a case of determining that the received trigger frame is an MU-RTS TXS Trigger frame addressed to the STA itself.

In S808, the control unit 301 waits the IFS time. Note that during the wait time, the control unit 301 cooperates with the frame processing unit 303 to generate a UL TB PPDU for transmitting uplink data stored in a transmission queue. After the IFS elapses, the control unit 301 cooperates with the communication unit 206 to transmit the UL TB PPDU containing the uplink data. This processing assumes that each STA prioritizes the storing of low-latency data in the UL TB PPDU in cases where such data is stored in a transmission queue. Note that in a case where the received trigger frame is an MU-RTS TXS Trigger frame, the control unit 301 alone occupies the same bandwidth as the bandwidth of the PPDU used to convey the trigger frame. In other words, the control unit 301 alone occupies the channel, and transmits a UHR PPDU in non-TB format to the AP 101. Upon completion of the uplink transmission processing, the control unit 301 advances the processing to S810.

Next, in S810, the control unit 301 determines whether or not the duration of the TXOP acquired by the AP has elapsed. Specifically, at the beginning of receiving data in S801, the control unit 301 stores the period of the TXOP acquired by the AP, on the basis of the value stored in the Duration field. The control unit 301 then uses the stored period and an internal clock included in itself to determine whether or not the duration of the TXOP acquired by the AP has elapsed. If it is determined that the duration of the TXOP acquired by the AP has elapsed, the processing is advanced to S811, whereas if it is not determined that the duration of the TXOP acquired by the AP has elapsed, the processing is advanced to S802 to stand by to receive downlink data from the AP.

In S811, the control unit 301 determines whether or not to end operations. If it is determined to end operations, the series of processing operations is ended, shutdown processing is performed, and the STA itself shifts to a powered-off state. On the other hand, if it is not determined to end operations, the control unit 301 advances the processing to S800.

Next, other preemption control will be described. In S812, the control unit 301 determines whether or not data to be transmitted is stored in a transmission queue, and determines whether or not the channel is in the Idle state. If it is determined that data to be transmitted is stored in a transmission queue and that the channel is in the Idle state, the processing is advanced to S813.

In S813, the control unit 301 performs processing for transmitting data stored in a transmission queue. This processing for transmitting data will be described using a later flowchart.

Next, in S814, the control unit 301 determines whether or not the channel is in the Busy state due to data communication in the BSS and information indicating that preemption is likely is reported to the AP. The determination of whether or not the channel is in the Busy state due to data communication in the BSS can be achieved by comparing the value of the BSS color subfield included in the U-SIG which is the preamble of a PPDU being received from the outside and the STA-managed value of the BSS color to which the STA itself belongs. In a case where the value of the BSS color subfield and the STA-managed value of the BSS color to which the STA itself belongs match, the control unit 301 determines that the channel is in the Busy state due to a PPDU addressed to the BSS to which the STA itself belongs. On the other hand, in a case where the value of the BSS color subfield and the STA-managed value of the BSS color to which the STA itself belongs do not match, the control unit 301 determines that the channel is not in the Busy state due to data communication in the BSS to which the STA itself belongs. If the condition that the channel is in the Busy state due to data communication in the BSS and the condition that information indicating that preemption is likely is reported to the AP are both met, the control unit 301 advances the processing to S815. On the other hand, in a case of determining that the channel is not in the Busy state due to data communication in the BSS (in other words, the channel is in the Busy state due to data communication in an OBSS), the control unit 301 advances the processing to S816. Likewise, in a case of determining that information indicating that preemption is likely is not reported to the AP, the control unit 301 advances the processing to S816.

In S816, the control unit 301 sets the NAV of the STA itself on the basis of period information included in a received frame addressed to another device, and advances the processing to S811.

On the other hand, in S815, the control unit 301 cooperates with the communication unit 206 to stand by to receive a trigger frame from the AP, and determines whether or not a trigger frame is received from the AP. If a trigger frame is received from the AP, the processing is advanced to S807, whereas if a trigger frame is not received from the AP, the processing is advanced to S811. According to the processing described above, a STA reporting PO information deliberately does not set its NAV even in a case where a PPDU is transmitted by another device in the BSS to which the STA itself belongs. Consequently, a STA reporting PO information becomes able to stand by to receive a trigger frame.

Next, communication control by the AP 101 will be described using Fig. 9. In the following explanation of Fig. 9, the functional units of the AP 101 are used as the grammatical subjects of the description. The control unit 301 of the AP 101 cooperates with the communication unit 206 to receive indication whether preemption is likely or not from the STAs. This information is the PO information described above, and as described in the control on the STA side, is assumed to include a UHR OM field stored in the MAC header of uplink data transmitted from each STA. Note that the mechanism for conveying the PO information is not limited to the above. The control unit 301 cooperates with the settings management unit 305 to manage the PO information received from each STA in association with that STA. Also, in a case where a report regarding the assumed data volume to be anticipated in the event that low-latency data occurs is received along with the PO information, this information is also managed in association with the STA from which the information originates. This information is referenced, as appropriate, in a determining step described later.

In S901, the control unit 301 determines whether or not downlink data to be transmitted to a STA is present. If it is determined that downlink data to be transmitted to a STA is present, the processing is advanced to S902, whereas if it is not determined that downlink data to be transmitted to a STA is present, the processing is advanced to S912.

First, downlink data transmission processing and uplink data preemption control in the case of downlink data transmission processing will be described.

In S902, the control unit 301 cooperates with the communication unit 206 to secure a TXOP. For example, if the channel providing the network is in the Idle state and a CSMA/CA-based transmission opportunity is acquired, the AP 101 transmits the RTS frame described above to secure a TXOP, and also notifies the surroundings that the TXOP has been secured.

In S903, the control unit 301 transmits a frame containing downlink data to one or more STAs, the frame having been generated in cooperation with the generation unit 302.
The transmission processing is executed in cooperation with the communication unit 206.

Next, in S904, the control unit 301 cooperates with the communication unit 206 and the processing unit 303 to determine whether or not a frame containing Block Ack information is received from one or more STAs. If a frame containing Block Ack information is received, the processing is advanced to S905, whereas if a frame containing Block Ack information is not received, the processing is advanced to S903 and the transmission of downlink data is continued.

In S905, the control unit 301 determines whether or not the received frame contains information indicating the presence of preempting data. If the received frame contains information indicating the presence of preempting data, the processing is advanced to S908, whereas if not, the processing is advanced to S906. The information received in S905 is the PI information described above. Note that in a case where information indicating the volume of data expected to be transmitted is received along with the PI information, the control unit 301 cooperates with the settings management unit 305 to manage the information on the data volume in association with the originating STA.

In S906, the control unit 301 refers to the PO information associated with each STA managed by the settings management unit 305 and determines whether or not information indicating that preemption is likely is received from one or more STAs.
In a case of determining that information indicating that preemption is likely is received from one or more STAs, the control unit 301 advances the processing to S907. On the other hand, in a case of determining that information indicating that preemption is likely is not received from one or more STAs, the control unit 301 advances the processing to S911.

In S907, the control unit 301 determines whether or not a transmission interruption condition is met. If it is determined that the transmission interruption condition is met, the processing is advanced to S908, whereas if it is not determined that the transmission interruption condition is met, the processing is advanced to S911. More specifically, the control unit 301 determines whether or not the transmission interruption condition is met on the basis of the number of STAs that are likely to perform preemption, the assumed data volume, a history of past communication, and the like. Note that the control unit 301 of the current AP 101 can also determine that the transmission interruption condition is not met in a case of determining that the downlink data that the AP 101 itself is transmitting is low-latency data of higher priority. In this case, a configuration may be adopted such that the determination in S907 is made again at the completion of the transmission of the low-latency data of higher priority. As another example, a configuration can be adopted such that the transmission interruption condition is determined to be met in a case where the number of STAs that are likely to perform preemption exceeds a prescribed number and a period corresponding to a threshold value managed by the management unit has elapsed. Note that a configuration can also be adopted such that the threshold value is updated periodically on the basis of the number of STAs that are likely to perform preemption, the assumed data volume, a communication history, and the like. For example, the threshold value may be updated every minute on the basis of the most recent communication history, an updated assumed data volume received from each STA, and the like. Performing this processing makes it possible to adjust the frequency of issuing trigger frames for preemption according to the most recent communication trends.

Next, in S908, the control unit 301 determines one or more STAs that are to perform preemption. At this time, it is also decided what size of RU is to be allocated to each STA. Note that this determination processing may be performed on the basis of the PO information and the PI information described above, the assumed data volume described above, an expected data volume, a past communication history, information on Buffer Status Reports (BSRs) received from STAs in the past, and the like. Note that some RUs may also be configured as RA-RUs. Furthermore, in a case where PI information is received from a STA and the STA has a high volume of data expected to be transmitted, it may also be determined that the STA alone is to occupy the entire channel for the duration of a certain period and transmit uplink data. In a case of causing one STA to occupy the entire channel, the control unit 301 is assumed to cooperate with the generation unit 302 to generate and transmit an MU-RTS TXS Trigger frame to the STA.

The MU-RTS TXS Trigger frame is a trigger frame for sharing a TXOP acquired by the AP with another STA. The STA receiving this trigger frame is permitted to transmit ordinary MU PPDUs (Non-TB PPDUs) to the AP during a period indicated in the trigger frame.

On the other hand, in a case of determining that multiple STAs are to perform preemption, the control unit 301 cooperates with the generation unit 302 to generate a trigger frame of the type described using Fig. 5 (trigger frame of the Basic type and trigger frame of the low-latency type). Next, the control unit 301 cooperates with the communication unit 206 to transmit the generated trigger frame to the multiple STAs.

In S909, the control unit 301 waits the duration of the IFS time, and advances the processing to S910 after the IFS time elapses. In S910, the control unit 301 cooperates with the communication unit 206 attempts to receive a UL TB PPDU transmitted from the multiple STAs triggered by the trigger frame. Also, in a case where the trigger frame transmitted by the AP 101 is an MU-RTS TXS Trigger frame, the control unit 301 attempts to receive a UL PPDU transmitted from one STA triggered by the trigger frame. A PPDU successfully received as a result of the reception attempt is transferred to the processing unit 303 and processed by the processing unit 303. User data and the like stored in the PPDU is transferred to a higher layer such as the IP layer or the application layer, as appropriate. Also, in a case where the addresses of the received data is another STA in the BSS, the data is stored in a transmission queue of the AP 101. At this point, it is assumed that data of a high-priority type is stored in a high-priority transmission queue. Upon completion of the reception of uplink data triggered by the trigger frame, the control unit 301 advances the processing to S911.

In S911, the control unit 301 determines whether or not the secured TXOP is remaining. If it is determined that the secured TXOP is remaining, the processing is advanced to S903, whereas if it is not determined that the secured TXOP is remaining (that is, if it is determined that the TXOP is not remaining), the processing is advanced to S900.

Next, a specific control method for performing preemptive communication of low-latency data while another STA is transmitting uplink data to the AP 101 will be described. In S912, the control unit 301 determines whether or not uplink data is received from any STA connected to the AP 101. If it is determined that uplink data is received from any STA connected to the AP 101, the processing is advanced to S913. If it is determined that uplink data is not received from any STA connected to the AP 101, the processing is advanced to S916.

In S913, the control unit 301 determines whether or not information indicating that preemption is likely is received from one or more STAs, in a manner similar to the processing described in S906. In a case of determining that information indicating that preemption is likely is received from one or more STAs, the control unit 301 advances the processing to S914. On the other hand, in a case of determining that information indicating that preemption is likely is not received from one or more STAs, the control unit 301 advances the processing to S915.

In S914, the control unit 301 cooperates with the communication unit 206 to perform reception processing accounting for preemption. Details of this processing will be described later using the flowchart in Fig. 10. On the other hand, in S915, the control unit 301 performs reception processing not accounting for preemption. This processing is data reception processing that does not account for preemption, in a manner similar to the PPDU reception processing in IEEE 802.11ax, IEEE 802.11be, and the like. In this way, in a case where not a single STA announcing an intent to perform preemption is present, preemption control is not performed.

Lastly, in S916, the control unit 301 determines whether or not to end operations. If it is determined to end operations, the series of processing operations is ended, shutdown processing is performed, and the STA itself shifts to a powered-off state. On the other hand, if it is not determined to end operations, the control unit 301 advances the processing to S900.

Next, details of the reception processing accounting for preemption described in S914 of Fig. 9 will be described using the flowchart in Fig. 10. In S1001, the control unit 301 of the AP 101 cooperates with the communication unit 206 to receive uplink data from one or more STAs. In S1002, the control unit 301 cooperates with the communication unit 206 and the processing unit 303 to determine whether or not the reception of one PPDU is complete. If it is determined that the reception of one PPDU is complete, the processing is advanced to S1003, whereas if it is not determined that the reception of one PPDU is complete, the flow returns to the processing in S1001 and processing for receiving subsequent uplink data is performed.

In S1003, the control unit 301 determines whether or not a reception interruption condition is met. The specific determination condition in this determination is similar to the transmission interruption determination condition in the transmission processing described in S907. If it is determined that the reception interruption condition is met, the processing is advanced to S1006, whereas if it is determined that the reception interruption condition is not met, the processing is advanced to S1004.

Note that in S1003, it can also be determined that the reception interruption condition is not met in a case where it is determined that the uplink data that the AP itself is receiving is high-priority low-latency data. In this case, a configuration may be adopted such that the determination in S1003 is made again at the completion of the reception of the uplink data as the high-priority low-latency data.

In S1004, the control unit 301 cooperates with the generation unit 302 to generate a Block Ack for the one or more STAs from which the uplink data originates. Next, the control unit 301 cooperates with the communication unit 206 to transmit the generated Block Ack to the one or more STAs. Upon completion of transmission, the control unit 301 advances the processing to S1005.

In S1005, the control unit 301 determines whether or not the TXOP for transmitting uplink data by the STA from which the uplink data originates is remaining. Specifically, at the beginning of receiving data in S1001, the control unit 301 stores the period of the TXOP acquired by the STA, on the basis of the value stored in the Duration field of a frame received from the STA. The control unit 301 then uses the stored period and an internal clock included in itself to determine whether or not the duration of the TXOP acquired by the STA has elapsed.
If it is determined that the duration of the TXOP acquired by the STA has elapsed, the processing is advanced to S900, whereas if it is not determined that the duration of the TXOP acquired by the STA has elapsed, the processing is advanced to S1001 to stand by to receive uplink data from the STA.

Next, a procedure for reporting information indicating the occurrence of preemption to STAs and performing preemption involving low-latency data will be described. In S1006, the control unit 301 cooperates with the generation unit 302 to generate a frame containing a Block Ack and information indicating the occurrence of preemption for one or more STAs. The control unit 301 then cooperates with the communication unit 206 to transmit the generated frame to the one or more STAs. Note that a configuration can be adopted such that that a CAS Control Subfield is stored in the HT Control field described above, and the above information is stored in this field. For example, a configuration can be adopted such that B3 of the CAS Control Subfield is used to represent whether or not preemption has occurred. In the present embodiment, information indicating the occurrence of preemption is reported to STAs by transmitting a Block Ack frame with B3 set to "1". By reporting this information, the occurrence of preemption can be reported appropriately to a STA that has secured a transmission opportunity for uplink data. Operations by a STA receiving this report will be described later. Note that the transmission of a frame with "0" stored in B3 means reporting information indicating that preemption has not occurred to a STA.

Next, in S1007, the control unit 301 cooperates with the generation unit 302 and the communication unit 206 to determine one or more STAs that are to perform preemption, and transmit a trigger frame to the determined one or more STAs. Since the specific processing is similar to the processing described in S908, a description is omitted.

In S1008, the control unit 301 waits the IFS time, and in S1009, the control unit 301 cooperates with the communication unit 206 and the processing unit 303 to receive a UL TB PPDU and/or a UL PPDU triggered by the trigger frame. Upon completion of the reception processing, the control unit 301 advances the processing to S1005.

Next, the processing described in S813 by which a STA transmits uplink data will be described using Fig. 11. A STA connected to the AP 101, such as any of the STAs 103-1 to 103-N, carries out the control in Fig. 11 in a case of transmitting uplink data to the AP 101.

In S1101, the control unit 301 of the STA cooperates with the generation unit 302 and the communication unit 206 to transmit uplink data. Next, in S1102, the control unit 301 determines whether or not the transmission of one PPDU is complete. If it is determined that the transmission of one PPDU is complete, the processing is advanced to S1103, whereas if it is not determined that the transmission of one PPDU is complete, the flow returns to the processing in S1101 and the transmission of uplink data continues.

In S1103, the control unit 301 cooperates with the communication unit 206 and the processing unit 303 to receive a frame containing Block Ack information. If it is determined that a frame containing Block Ack information is received, the processing is advanced to S1104, whereas if it is not determined that a frame containing Block Ack information is received, the flow returns to the processing in S1101.

In S1104, the control unit 301 determines whether or not the received frame contains information indicating the occurrence of preemption. If it is determined that the received frame contains information indicating the occurrence of preemption, the processing is advanced to S1105, whereas if it is not determined that the received frame contains information indicating the occurrence of preemption, the processing is advanced to S1111.

In S1111, the control unit 301 determines whether or not the TXOP that the STA itself acquired to transmit uplink data is remaining. In a case of determining that the TXOP that the STA itself acquired to transmit uplink data is remaining, the control unit 301 advances the processing to S1101. On the other hand, in a case of determining that the TXOP that the STA itself acquired to transmit uplink data is not remaining, the control unit 301 completes the series of transmission processing steps and advances the processing to S811.

Next, preemption handling processing in a STA will be described. In S1105, the control unit 301 cooperates with the generation unit 302 and the communication unit 206 to interrupt data transmission processing.

In S1106, the control unit 301 cooperates with the communication unit 206 and the processing unit 303 to receive a trigger frame. In S1107, the control unit 301 determines whether or not a transmission opportunity is allocated to the STA itself by the received trigger frame. In a case of determining that a transmission opportunity is allocated to the STA itself by the received trigger frame, the control unit 301 advances the processing to S1108, whereas in a case of determining that a transmission opportunity is not allocated to the STA itself by the received trigger frame, the control unit 301 advances the processing to S1110.
Since this processing is similar to S807, a description is omitted.

In S1108 and S1109, the control unit 301 transmits a UL TB PPDU or a UL PPDU after waiting the IFS time. Since this processing is similar to S808 and S809, a description is omitted. In this case, it is likewise assumed that low-latency data is prioritized for storing in the UL TB PPDU or the UL PPDU. Upon completion of the uplink data transmission processing, the control unit 301 advances the processing to S1111.

On the other hand, in S1110, the control unit 301 waits for a duration corresponding to the IFS time plus the transmission opportunity allocated by the trigger frame. Upon completion of waiting, the processing is advanced to S1111. The above processing causes the STA to wait until the completion of uplink transmission by another in a case where a transmission opportunity is not allocated to the STA itself by the trigger frame that is issued by the AP 101 to allow for the transmission of low-latency data. After a wait period for preemption by another STA ends, the STA can resume uplink transmission processing if the TXOP is remaining.

Note that the present embodiment assumes that a Block Ack is transmitted as an acknowledgment of data reception, but is not limited thereto. For example, the acknowledgment may also be a simple Ack. In this case, a configuration may be adopted such that PI information is reported along with the Ack to the other device. Also, the present embodiment assumes that the Short Interframe Space (SIFS) is used as the IFS time, but is not limited thereto.

### (Modification)

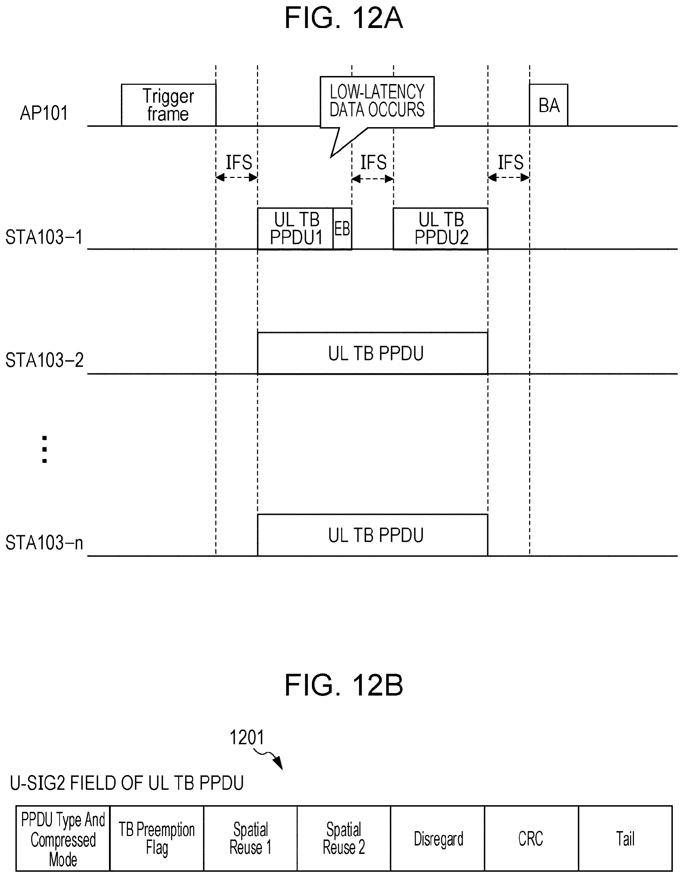

A configuration can also be adopted such that, in addition to the processing described in the embodiment above, the preemption control indicated in the present modification is carried out. A STA according to the present modification preempts itself to transmit a new UL TB PPDU containing low-latency data during transmission of a UL TB PPDU allocated to the STA itself while the STA itself is transmitting the UL TB PPDU. A specific mechanism will be described using Figs. 12A and 12B. Fig. 12A is a schematic diagram illustrating an example of preemption processing according to a modification, and Fig. 12B illustrates an example of a U-SIG2 field constituting the preamble portion of a UL TB PPDU.

First, the AP 101 transmits the trigger frame described in S908. Each STA designated as an addressee of the trigger frame transmits a UL TB PPDU after the IFS time elapses. At this point, each STA determines whether preemption is likely or not. This determination may be made in a manner similar to the first embodiment. A STA that has determined that preemption is likely stores information indicating as much in the preamble of the UL TB PPDU to convey to the AP 101 that preemption is likely. Note that Fig. 12A illustrates an example in which the STA 103-1 determines that preemption is likely while the STA 103-2 and the STA 103-3 do not determine that preemption is likely.

The control unit 301 of a STA that has determined that preemption is likely, such as the STA 103-1, cooperates with the generation unit 302 to generate a TB PPDU in the preamble of which is stored information indicating that preemption is likely. Next, the control unit 301 of the STA that has determined that preemption is likely transmits the UL TB PPDU to the AP.

The information indicating that preemption is likely can be stored in, for example, a TB Preemption Flag field 1201 of U-SIG2, as indicated by 1021 in Fig. 12B. The case in which "1" is stored in the field indicates that preemption is likely during transmission of the TB PPDU, whereas the case in which "0" is stored in the field indicates that preemption is not likely during transmission of the TB PPDU. This field may be configured to be stored in B2 of the U-SIG2 field, for example. Note that this placement of the field is an example, and the TB Preemption Flag field may also be provided in any of bits B11 to B15, which are indicated as Disregard in Fig. 12B.

Returning to the explanation of Fig. 12A, the control unit 301 of the STA that has determined that preemption is likely determines whether or not low-latency data has occurred and is stored in a transmission queue. If it is determined that low-latency data has occurred and is stored in a transmission queue, transmission of the UL TB PPDU currently being transmitted is interrupted, and a signal referred to as an Endbreaker (EB) is transmitted to the AP 101 to convey that an interruption has occurred. The EB is a signal made up of a special bit sequence for conveying to another device that an interruption has occurred. The AP 101 receives and detects the EB signal. This detection makes it possible to know in advance that an uplink data transmission of low-latency data will be performed using a new UL TB PPDU instead of the current uplink data transmission. In this case, the STA that has determined that preemption is likely completes transmission of the UL TB PPDU1 at a smaller size than was originally expected when the trigger frame was received.

Next, the control unit 301 of the STA that has determined that preemption is likely transmits a UL TB PPDU in which low-latency data is stored, in response to the elapse of the IFS time from the completion of the transmission of the EB signal. The AP 101 has detected the EB signal in advance and therefore can stand by to receive the new UL TB PPDU in the RU allocated to the STA (for example, the STA 103-1). Next, the AP 101 decodes the UL TB PPDU and forwards data contained in the UL TB PPDU to another STA and/or forwards data to a higher layer of the AP 101, as necessary.

According to the processing described above, a STA can interrupt its own transmission while transmitting a UL TB PPDU, and preemptively transmit a new UL TB PPDU containing low-latency data. This processing makes it possible to preemptively transmit low-latency data without adopting a complex configuration such as swapping out the data to be stored in a UL TB PPDU currently being transmitted from ordinary-priority data expected to be transmitted to high-priority data.

### <Other embodiments>

The present invention is also achievable by a process of supplying a program for achieving one or more functions of the embodiment described above to a system or a device via a network or a storage medium, and having one or more processors in a computer of the system or device read out and execute the program. The present invention is also achievable by a circuit (for example, an ASIC) that achieves the one or more functions.

The invention is not limited to the embodiments described above, and various changes and modifications are possible without departing from the spirit and scope of the invention. Accordingly, the claims are attached to make public the scope of the invention.

This application claims the benefit of Japanese Patent Application No. 2023-065267 filed April 12, 2023, which is hereby incorporated by reference herein in its entirety.

### Reference Signs List

- 101: AP
- 103-1: STA
- 103-2: STA
- 103-n: STA
- 202: control unit
- 206: communication unit

## Claims

1. A communication device capable of wireless communication based on the IEEE 802.11 standards, the communication device **characterized by** comprising:
a first transmission control means that, in a case where data transmitted to the communication device by an access point to which the communication device is connected is received during a transmission opportunity acquired by the access point, and data to be transmitted at low latency to the outside is stored in a transmission queue of the communication device, transmits a frame containing information indicating an acknowledgment of the received data and information pertaining to preemption involving low-latency data; and
a second transmission control means that transmits data to the outside in accordance with the reception of a trigger frame issued after the frame is transmitted to the access point.

2. The communication device according to claim 1,
**characterized in that**
in a case where a prescribed condition is met, the first transmission control means transmits, at a timing different from a timing at which to perform reception processing for receiving data from the access point, a second frame not containing information indicating an acknowledgment with respect to the access point but containing information indicating that preemption involving low-latency data may occur.

3. The communication device according to claim 2,
**characterized in that**
the second frame additionally contains second information pertaining to an assumed data volume to be anticipated in the event that preemption occurs, and the frame contains information indicating the volume of low-latency data expected to be transmitted.

4. The communication device according to any one of claims 1 to 3, **characterized by** further comprising:
a reception control means that, after the frame is transmitted, controls reception such that the communication device stands by to receive the trigger frame.

5. The communication device according to any one of claims 1 to 4, **characterized in that**
the trigger frame contains information indicating a transmission opportunity for transmitting low-latency data.

6. A communication device capable of wireless communication based on the IEEE 802.11 standards, the communication device **characterized by** comprising:
a first reception control means that receives, from another communication device connected to the communication device, a frame containing information indicating an acknowledgment of data transmitted by the communication device and information pertaining to preemption involving low-latency data;
a transmission control means that, after the frame is received, transmits a trigger frame for providing an uplink transmission opportunity for low-latency data to the other communication device; and
a second reception control means that attempts to receive an uplink data frame transmitted in response to the trigger frame.

7. The communication device according to claim 6,
**characterized in that**
the frame indicates a response to data that the communication device transmitted to the other communication device during a transmission opportunity acquired by the communication device, and contains at least information indicating an acknowledgment of the data and the information pertaining to preemption.

8. The communication device according to claim 6 or 7,
**characterized in that**
the trigger frame contains information indicating a transmission opportunity for transmitting low-latency data.

9. The communication device according to any one of claims 6 to 8, **characterized in that**
the first reception control means further receives a second frame addressed to the communication device, the second frame not containing information indicating an acknowledgment but containing information indicating that preemption involving low-latency data may occur.

10. The communication device according to claim 9,
**characterized in that**
the second frame contains, in addition to the information, second information pertaining to an assumed data volume to be anticipated in the event that preemption occurs, and the frame contains information indicating the volume of low-latency data expected to be transmitted.

11. The communication device according to claim 9 or 10,
**characterized in that**
in a case where it is determined that the information pertaining to preemption involving low-latency data is not received from any communication device connected to the communication device, the transmission control means does not transmit the trigger frame for providing the uplink transmission opportunity for low-latency data to the other communication device.

12. The communication device according to claim 11,
**characterized in that**
in a case where it is determined that the information pertaining to preemption involving low-latency data is received from one or more other communication devices connected to the communication device and uplink data is being received from a specific communication device, the transmission control means interrupts the reception of uplink data from the specific communication device and transmits the trigger frame for providing the uplink transmission opportunity for low-latency data to the one or more other communication devices.

13. The communication device according to claim 12,
**characterized in that**
in a case where the uplink data being received from the specific communication device is low-latency data, the transmission control means transmits the trigger frame for providing the uplink transmission opportunity for low-latency data to the one or more other communication devices after the reception of the low-latency data is completed.

14. A communication device capable of wireless communication based on the IEEE 802.11 standards, the communication device **characterized by** comprising:
a first transmission control means that transmits information indicating that preemption involving low-latency data to be transmitted to the outside may occur to an access point to which the communication device is connected; and
a second transmission control means that, in a case where the low-latency data is stored in a transmission queue while transmission of a TB PPDU containing uplink data of a specific size is being performed on the basis of a trigger frame received from the access point, ends transmission of the TB PPDU by switching the uplink data to be contained in the TB PPDU to a size smaller than the specific size, and starts transmission of a second TB PPDU containing some or all of the low-latency data stored in the transmission queue.

15. A control method of a communication device capable of wireless communication based on the IEEE 802.11 standards, the control method **characterized by** comprising:
a first transmission controlling step for, in a case where data transmitted to the communication device by an access point to which the communication device is connected is received during a transmission opportunity acquired by the access point, and data to be transmitted at low latency and to be transmitted to the outside is stored in a transmission queue of the communication device, transmitting a frame containing information indicating an acknowledgment of the received data and information pertaining to preemption involving low-latency data; and
a second transmission controlling step for transmitting data to the outside in accordance with the reception of a trigger frame issued after the frame is transmitted to the access point.

16. A control method of a communication device capable of wireless communication based on the IEEE 802.11 standards, the control method **characterized by** comprising:
a first reception controlling step for receiving, from another communication device connected to the communication device, a frame containing information indicating an acknowledgment of data transmitted by the communication device and information pertaining to preemption involving low-latency data;
a transmission controlling step for, after the frame is received, transmitting a trigger frame for providing an uplink transmission opportunity for low-latency data to the other communication device; and
a second reception controlling step for attempting to receive an uplink data frame transmitted in response to the trigger frame.

17. A control method of a communication device capable of wireless communication based on the IEEE 802.11 standards, the control method **characterized by** comprising:
a first transmission controlling step for transmitting information indicating that preemption involving low-latency data to be transmitted to the outside may occur to an access point to which the communication device is connected; and
a second transmission controlling step for, in a case where the low-latency data is stored in a transmission queue while transmission of a TB PPDU containing uplink data of a specific size is being performed on the basis of a trigger frame received from the access point, completing transmission of the TB PPDU by changing the uplink data to be contained in the TB PPDU to a size smaller than the specific size, and starting transmission of a second TB PPDU containing some or all of the low-latency data stored in the transmission queue.

18. A program for causing a computer to execute the control method of a communication device according to any one of claims 15 to 17.
